# EUROPEAN PATENT SPECIFICATION

(11) **EP 1 679 848 B1**
(45) Date of publication and mention of the grant of the patent: **03.03.2010**
(21) Application number: 06005210.7
(22) Date of filing: 24.03.2000
(51) Int. Cl.: H04L 12/66, H04M 1/57, H04M 3/42, H04M 7/00, H04L 29/06, H04Q 3/00

(54) **Methods and systems for routing calling name service query messages in a communications network**
Verfahren und Systeme zum Lenken von Anfragenachrichten eines Anrufernamensdienstes in einem Kommunikationsnetz
Procédés et systèmes d'acheminement de messages de requete de service du nom de l'appelant dans un réseau de communications

(30) Priority: 05.04.1999 US 127889 P
(43) Date of publication of application: 12.07.2006
(62) Divisional of application: 00919614.8
(73) Proprietor: Tekelec, Calabasas, CA 91302 (US)
(72) Inventor: Glenn, Dean Douglas, Cary, NC 27511 (US); Marsico, Peter Joseph, Carrboro, NC 27510 (US)
(74) Representative: Skuhra, Udo

(56) References cited:
- WO-A-99/16258
- POWERS R ET AL: "CALLING NAME DELIVERY" ANNUAL REVIEW OF COMMUNICATIONS, NATIONAL ENGINEERING CONSORTIUM, CHICAGO, IL, US, vol. 46, January 1992 (1992-01), pages 633-637, XP000321978 ISSN: 0886-229X

## Description

### Related Application Information

### Technical Field

The present invention relates to the routing of signaling messages in a communications network, and more particularly to methods and systems for routing signaling messages associated with a request for calling name service.

### Background Art

WO 99/16258 A discloses a computer-readable medium having stored thereon a national CNAM database comprising a plurality of first data fields containing directory numbers of subscribers of a plurality of telephone service providers in a given country and a plurality of section data fields respectively corresponding to the first data fields containing calling name information for each of the subscribers. A calling name service provider is identified by a point code adress and a query is routed by an STP to the specified point code address. The calling name service provider is accessable via an SS7 network.

In document D2 POWERS R ET AL: "CALLING NAME DELIVERY" ANNUAL REVIEW OF COMMUNICATIONS, NATIONAL ENGINEERING CONSORTIUM, CHICAGO, IL, US, vol. 46, January 1992 (1992-01), pages 633-637, XP000321978 ISSN: 0886-229X, a Calling Name Delivery service is disclosed with a CNAM architecture, wherein the Calling Name database is accessable via an STP which is an SS7 network component. Calling Name queries are delivered over an SS7 network.

The development and widespread implementation of Common Channel Signaling (CCS) technology over the past several decades has made possible many, if not all, of the advanced or "intelligent" services typically associated with modern telephony networks. Because CCS-based telecommunication network architectures employ a signaling network that is distinct and separate from the communication network used to carry voice-related information, many of the problems associated with direct current (DC) signaling and signaling within the voice band (in-band signaling) are no longer present in modern telecommunication networks. An in-depth discussion of CCS network technology and the evolution of telecommunication networking can be found *in Signaling System* #7, Second Edition, January 1998, published by McGraw-Hill.

With regard to the advanced or "intelligent" services mentioned above, it will be appreciated that such Advanced Intelligent Network (AIN)-type customer services include, but are not limited to Find Me service; Follow Me service; Computer Security service; Call Pickup service; Store Locator service; Call Waiting service; Call Block service; Three Way Calling service; 800 number services; and Calling Name (CNAM) Delivery service.

Find Me service allows a customer's calls to be forwarded to another location. The difference between this feature and current call forwarding functionality is the ability to screen unwanted calls from forwarding. Only authorized callers are forwarded to the new location. Similarly, Follow Me service allows a number to be forwarded on a time schedule. The subscriber determines the time forwarding is to take place when the feature is invoked. Destinations can include both wired and wireless telephones or handsets.

Computer Security service allows subscribers to prevent unauthorized callers from accessing a computer via modem. Only callers with the authorized access code or calling from an authorized number can access the computer. The SS7 network delivers the calling party number to the destination end office. This number is then checked in a database located with a Service Control Point (SCP), and, if authorized, is allowed to connect with the modem. With Call Pickup service, when a call is placed to a number and is unanswered, the called party can be paged via radio pager. The called party can then dial a code from any telephone at any location and immediately be connected with the waiting caller. With regard to paging type services, manufacturers of such Personal Communications Services (PCS) devices have to date developed two-way pagers that connect a caller with the party being paged. The pager is a two-way transceiver capable of receiving calls (pages) and connecting the caller with the paged party.

Store Locator service allows businesses to advertise one number, and have callers automatically transferred to the nearest location based on the caller's telephone number. This allows businesses to advertise nationwide for all locations without special ads that are region specific. The calling party number is matched in a routing database located at a Service Control Point (SCP) and the SCP provides the end office with the routing instructions based on the calling party number. With Call Routing service, businesses can reroute calls during periods of excessively high call volumes or after business hours.

Of particular interest with regard to the invention disclosed and described herein, is Calling Name (CNAM) Delivery service. With Calling Name Delivery service, the name of the calling party is retrieved from a database and presented to the called party. Such a service effectively allows business and residential subscribers to screen incoming calls by reading the name of the calling party on a display built into the telephone set, or on an adjunct device. This provides subscribers with the ability to better manage interruptions and multiple calls. Businesses can provide priority to preferred callers, while residential customers can decide which calls to answer immediately, and which to send to their answering machine or voice messaging service.

From the standpoint of a service provider or carrier, CNAM service has both positive and negative economic considerations. Customers desire the convenience of such a feature, and are therefor willing to pay a modest fee for the service. However, off-setting the customer fee-based revenue stream is the expense associated with obtaining the calling party information required to provide the CNAM service.

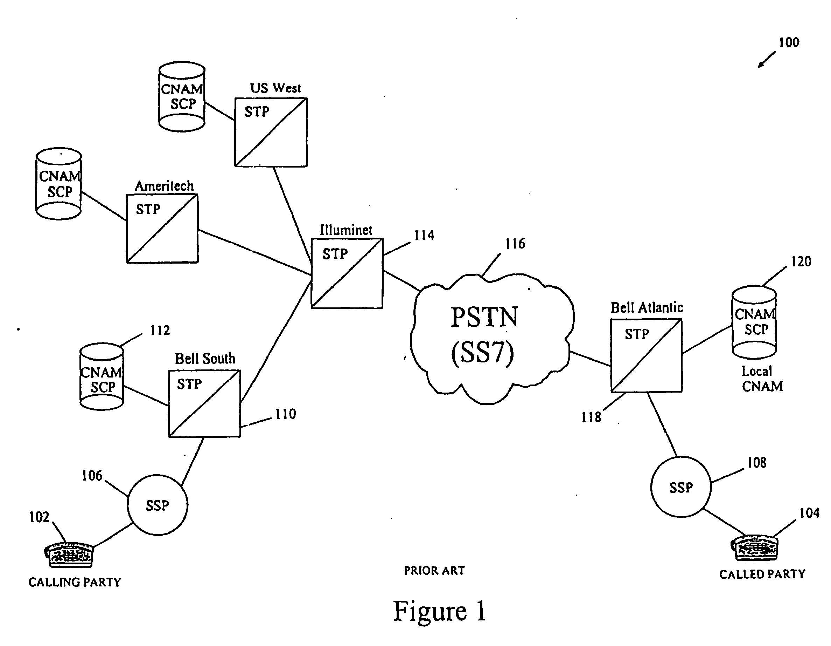

Shown in Figure 1 is a telecommunications network diagram illustrating a typical configuration employed by service providers provisioned to provide CNAM service to their customers. As such, Figure 1 includes a telecommunication network, generally indicated by the numeral **100.** Explicitly shown in Network **100** is a calling party (CgPA) **102** and a called party (CdPA) **104.** Calling party **102** is communicatively coupled to an End Office (EO) or Service Switching Point (SSP) **106,** while called party **104** is similarly coupled to an SSP **108.** Network **100** further includes a number of Signal Transfer Points (STPs) which are owned and operated by different service providers. More particularly, network **100** includes STPs **110, 114,** and **118** that are owned by Bell South, Illuminet, and Bell Atlantic, respectively. All of these STPs are connected either directly or indirectly via Signaling System 7 (SS7) links that collectively comprise the Public Switched Telephone Network (PSTN) SS7 network **116.** As further indicated in Figure 1, STP **110** is locally connected to an SCP node **112** that contains CNAM-type information associated with customers serviced by Bell South. Similarly, STP **118** is locally connected to an SCP node **120** that contains CNAM-type information associated with customers serviced by Bell Atlantic.

It will be appreciated that placing a call involves connecting a calling party to a called party, and this is typically accomplished through the use of a CCS SS7 signaling network and a sequence of SS7 call control messages. With particular regard to CNAM delivery service, it will be appreciated by those skilled in the art of SS7 signaling that the SSP servicing the called party is required to formulate and launch an SS7 query requesting CNAM information associated with the calling party. Such calling party information is typically stored in SCP database nodes that are connected to the SS7 signaling network.

As such, it will be further appreciated that in the event that a calling party is serviced by the same carrier as the called party, then the required CNAM information can likely be found in a local CNAM database or SCP owned by the carrier. In such a case, the carrier would not be charged by a competitor for access to the required CNAM information, since the carrier owns the CNAM database that contains the required calling party information. However, if the calling party is serviced by a carrier other than the carrier servicing the called party, then there will likely be a cost associated with obtaining the required CNAM information. In practice, carriers typically charge one another access fees that are based on the number of CNAM queries received or CNAM database dips performed during a given time period.

The latter scenario is specifically illustrated in Figure 1. In this case, calling party **102** is a customer of Bell South, while called party **104** is serviced by Bell Atlantic. As such, when SSP **108** is notified via an SS7 call setup message that calling party **102** is requesting a connection with called party **104,** a CNAM query must be sent through the SS7 network to the CNAM SCP **112** owned by the calling party's carrier, Bell South. It will also be appreciated that, in route to CNAM SCP **112,** the CNAM query message is switched through the hub provider (Illuminet) owned STP **114.** Consequently, in order to provide the called party **104** with Calling Name delivery service, the called party's carrier (Bell Atlantic) must pay CNAM query routing and processing related fees to both the hub provider (illuminet) and the calling party's carrier (Bell South).

It will also be appreciated that as the porting of customers (i.e., local number portability & mobile number portability) becomes more prevalent within telecommunication networks, the process of obtaining CNAM information from competing carriers will simultaneously become more complicated, more prone to failure, and potentially more expensive. In such a case, the called party carrier must first identify the competing carrier that services or "owns" the calling party. In some cases, this may require pay-peruse access to a number portability database, and consequently an increased overall cost associated with the providing of inter-service-provider CNAM service.

Therefore, what is needed is a system and method of accessing CNAM information for any calling party that does not require the accessing of carrier specific CNAM databases.

### Disclosure of the Invention

According to one aspect, the present invention includes a communications network element that is capable of generally routing messages and also identifying a CNAM-type query message and determining whether the query can be processed via a local CNAM database or whether the query must be routed to and processed by a national CNAM database. The CNAM routing node includes a communication module or modules capable of transmitting and receiving data packets over both SS7 and IP networks. A message discrimination process examines incoming data packets and subsequently directs certain query packets to a CNAM routing translation system which administers database lookup, and subsequent query routing address modifications.

The functions for providing CNAM routing translation system are described herein as modules or processes. It is understood that these modules or processes may be implemented as computer-executable instructions embodied in a computer-readable medium. Alternatively, the modules or processes described herein may be implemented entirely in hardware. In yet another alternative embodiment, the modules or processes described herein may be implemented as a combination of hardware and software.

The processes and modules for providing CNAM routing translation functionality are described below as being associated with cards or subsystems within a routing node. It is understood that these cards or subsystems include hardware for storing and executing the processes and modules. For example, each card or subsystems described below may include one or more microprocessors, such as an x86 microprocessor available from Intel Corp., and associated memory.

Accordingly, it is an object of the present invention to provide a routing node that is capable of routing an incoming Calling Name (CNAM) query message to a national CNAM database.

It is yet another object of the present invention to provide a routing node that that is capable of routing an incoming Calling Name (CNAM) query message to a national CNAM database over an Internet Protocol (IP) network using IP encapsulated Signaling System 7 (SS7) query messages.

It is yet another object of the present invention to provide a routing node that that is capable of receiving an incoming Calling Name (CNAM) query message, determining whether the customer associated with the query message is one that is serviced by a carrier that owns the routing node, and routing the query to either a local CNAM database owned by the carrier or to a national CNAM database.

It is yet another object of the present invention to provide a method whereby a telecommunication carrier can obtain Calling Name (CNAM) information for a customer serviced by a competing carrier without requiring access to a CNAM database owned by the competing carrier.

It is yet another object of the present invention to provide a method whereby a telecommunication carrier can obtain Calling Name (CNAM) information from a centralized national CNAM database.

It is yet another object of the present invention to provide a method whereby a telecommunication carrier can obtain Calling Name (CNAM) information from a centralized national CNAM database using IP encapsulated SS7 query messages.

It is yet another object of the present invention to provide a method of eliminating the need for SS7 network point codes associated with CNAM SCP nodes.

It is yet another object of the present invention to provide a method of creating a virtual CNAM SCP that is comprised of multiple CNAM SCP databases, wherein the virtual CNAM SCP is assigned a single SS7 network point code.

It is yet another object of the present invention to provide a method of allowing all messages requiring CNAM SCP service to be addressed to an SS7 point code that is the same as the SS7 point code of a router of the present invention.

It is yet another object of the present invention to provide a method of allowing CNAM query messages to be routed based on the carrier that owns or services the calling party associated with the CNAM query.
Some of the objects of the invention having been stated hereinabove, other objects will become evident as the description proceeds, when taken in connection with the accompanying drawings as best described hereinbelow.

Some of the objects of the invention having been stated hereinabove, other objects will be evident as the description proceeds, when taken in connection with the accompanying drawings as best described hereinbelow.

### Brief Description of the Drawings

Embodiments of the present invention will now be explained with reference to the accompanying drawings, of which:
Figure 1 is a network diagram illustrating a prior art network architecture that supports Calling Name (CNAM) delivery service;
Figure 2 is a schematic diagram of an STP switching node;
Figure 3 is a schematic network diagram illustrating a first CNAM routing database access scenario according to a preferred embodiment of a CNAM routing node of the present invention;
Figure 4a is a table that illustrates a sample Exceptions-based CNAM routing Database (ECD) structure used in a preferred embodiment of a CNAM routing node of the present invention;
Figure 4b is a table that illustrates a sample range-based Global Title Translation (GTT) routing database structure used in a preferred embodiment of a CNAM routing node of the present invention;
Figure 5 is a flow chart diagram illustrating message routing processing of a CNAM query message according to an embodiment of a CNAM routing node of the present invention;
Figure 6 is a schematic network diagram illustrating a second CNAM routing database access scenario according to a preferred embodiment of a CNAM routing node of the present invention;
Figure 7 is a schematic network diagram illustrating a network implementation of a CNAM routing node of the present invention that provides access to both a local and a national CNAM database;
Figure 8 is a schematic network diagram illustrating an alternate network implementation of a CNAM routing node of the present invention that provides access to a national CNAM database;
Figure 9 is a network diagram illustrating a network including a national CNAM database coupled to a CNAM routing node, wherein the national CNAM database and the routing node are owned by the same service provider;
Figure 10 is a block diagram of a preferred data structure for a national CNAM database according to an embodiment of the present invention; and
Figure 11 is a flow chart illustrating exemplary steps that may be performed by a search engine associated with the national CNAM database illustrated in Figure 10.

### Detailed Description of the Invention

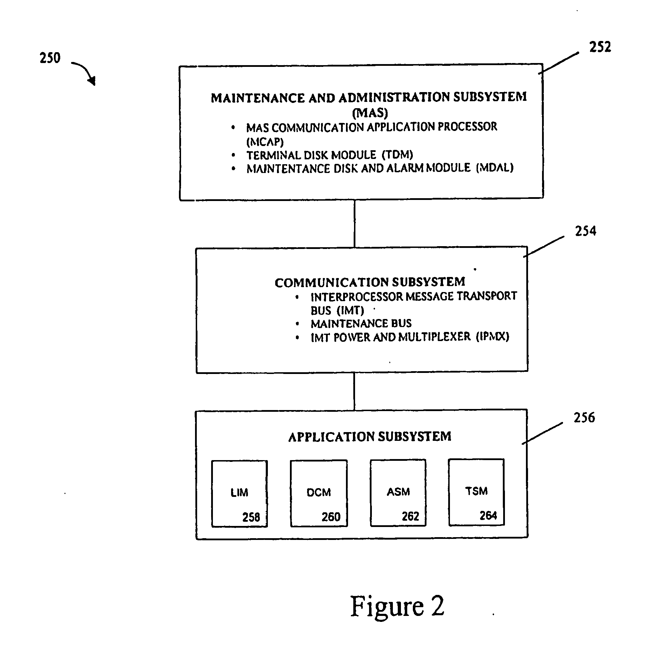

Disclosed herein are several embodiments of the present invention, all of which include a network element that performs functions similar to that of a traditional telecommunications network packet routing switch, such as a Signal Transfer Point (STP). Each of the embodiments described and discussed below, employs an internal architecture similar to that of high performance STP and signaling gateway (SG) products which are marketed by the assignee of the present application as the Eagle® STP and IP7 Secure Gateway^{tm}, respectively. A block diagram that generally illustrates the base internal architecture of the Eagle® STP product is shown in Figure 2. A detailed description of the Eagle® STP may be found in the *Eagle^{®} Feature Guide* PN/910-1225-01, Rev. B, January 1998, published by Tekelec Inc. of Calabasas, California, the disclosure of which is incorporated herein by reference in its entirety. Similarly, a detailed description of the IP⁷ Secure Gateway^{tm} may be found in Tekelec publication PN/909-0767-01, Rev B, August 1999, titled *Feature Notice IP⁷ Secure Gateway^{tm} Release 1.0,* the disclosure of which is hereby incorporated by reference in its entirety. The specific functional components of an IP⁷ Secure Gateway^{tm} for transmitting and receiving TCAP messages over an Internet Protocol (IP) network are described in commonly-assigned, co-pending U.S. Patent Application No. 09/205,809 filed December 4, 1998, the disclosure of which is incorporated herein by reference in its entirety. As described in the above referenced *Eagles^{®} Feature Guide,* an Eagle® STP **250** includes the following subsystems: a Maintenance and Administration Subsystem (MAS) **252,** a communication subsystem **254** and an application subsystem **256.** The MAS **252** provides maintenance communications, initial program load, peripheral services, alarm processing and system disks. The communication subsystem **254** includes an Interprocessor Message Transport (IMT) bus that is the main communication bus among all subsystems in the Eagle® STP **250.** This high-speed communications system functions as two 125 Mbps counter-rotating serial buses.

The application subsystem **256** includes application cards that are capable of communicating with the other cards through the IMT buses. Numerous types of application cards can be incorporated into STP **250,** including: a Link Interface Module (LIM) **258** that provides SS7 links and X.25 links, a Application Communication Module (ACM) **260** that provides a TCP/IP interface over Ethernet, and an Application Service Module (ASM) **262** that provides global title translation, gateway screening and other services. A Translation Service Module (TSM) **264** may also be provided to support triggered local number portability service. Once again, a detailed description of the Eagle® STP is provided in the above cited *Eagle^{®} Feature Guide* and need not be described in detail herein. It should also be appreciated that, in addition to conventional SS7 LIM cards, a Database Communication Module (DCM) can be employed in a similar manner to provide for the transport of Internet Protocol (IP) encapsulated SS7 messages over an IP network, as described in the above referenced *Feature Notice IP⁷ Secure* Gateway^{tm} *Release* 1.0 publication. With particular regard to the TSM triggered LNP services module mentioned above, a detailed description of the Tekelec triggered LNP solution may be found in the *Feature Guide LNP LSMS* PN/910-1598-01, Rev. A, January 1998, published by Tekelec, the disclosure of which is incorporated herein by reference in its entirety. Furthermore, systems and methods for providing triggerless LNP functionality within a network routing node are described in commonly-assigned, co-pending U.S. Patent Application 09/503,541 filed February 14, 2000, the disclosure of which is incorporated herein by reference in its entirety.

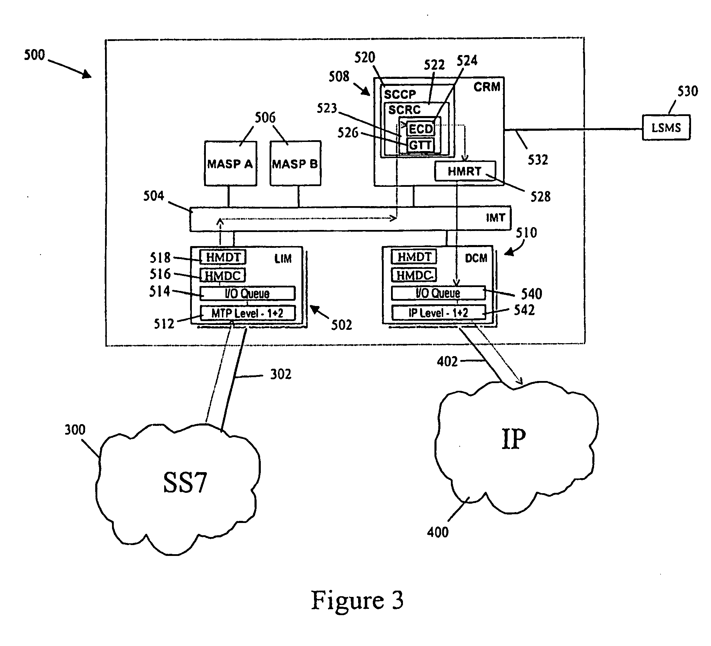

Shown in Figure 3 is one embodiment of a CNAM routing node of the present invention, generally indicated by the numeral **500.** It will be appreciated that CNAM routing node **500** includes a high speed Interprocessor Message Transport (IMT) communications bus **504.** Communicatively coupled to IMT bus **504** are a number of distributed processing modules or cards including: a pair of Maintenance and Administration Subsystem Processors (MASPs) **506,** an SS7 capable Link Interface Module (LIM) **502,** a Database Communication Module (DCM) **510,** and a CNAM Routing Module (CRM) **508.** These modules are physically connected to the IMT bus **504** such that signaling and other type messages may be routed internally between all active cards or modules. For simplicity of illustration, only a single LIM **502,** DCM **510** and CRM **508** are included in Figure 3. However, it should be appreciated that the distributed, multiprocessor architecture of the CNAM routing node **500** facilitates the deployment of multiple LIM, DCM, CRM, and other cards, all of which could be simultaneously connected to the IMT bus **504.**

MASP pair **504** implement the maintenance and administration subsystem functions described above. As the MASP pair **504** are not particularly relevant to a discussion of the CNAM routing attributes of the present invention, a detailed discussion of their function is not provided herein. For a comprehensive discussion of additional MASP operations and functionality, the above-referenced Tekelec publications can be consulted.

Focusing now on LIM card functionality, it will be appreciated that LIM **502** is comprised of a number of sub-component processes including, but not limited to: an SS7 MTP level 1 & 2 process **512,** an I/O buffer or queue **514,** an SS7 MTP level 3 layer HMDC process **516,** and an HMDT process **518.** MTP level 1 & 2 process **512** provides the facilities necessary to send and receive digital data over a particular physical media / physical interface, as well as to provide error detection / correction and sequenced delivery of all SS7 message packets. I/O queue **514** provides for temporary buffering of incoming and outgoing signaling message packets. MTP level 3 HMDC process **516** receives signaling messages from the lower processing layers and performs a discrimination function, effectively determining whether an incoming SS7 message packet requires internal processing or is simply to be through switched. The HMDT process **518** handles the internal routing of SS7 message packets that require additional processing prior to final routing. Once again, it should be appreciated that a LIM card may contain more functional processes than those described above. The above discussion is limited to LIM functionality associated with the basic processing of in-bound signaling messages.

As such, it will be appreciated that the three functional processes associated with DCM **510** shown in Figure 3 are simply those processes that are relevant to a discussion of out-bound DCM operation in the examples of CNAM routing node operation disclosed herein. The processes explicitly shown on the out-bound DCM **510** include an I/O queue **540** and IP level 1 & 2 process **542.** I/O queue **540** facilitates temporary buffering of incoming and outgoing signaling message packets. IP level 1 & 2 process **542** provides the facilities necessary to send and receive IP encapsulated SS7 digital data packets over a particular physical media / physical interface, as well as to provide error detection / correction and sequenced delivery of all IP encapsulated SS7 message packets.

In general, a CRM card **508** includes the database and database control processes necessary to achieve the CNAM routing functionality of the present invention. The CRM **508** shown in Figure 3 is comprised, in part, of an SCCP process **520,** a subsystem controller known as a Signaling Connection Routing Controller (SCRC) process **522,** a CNAM routing translation system **523,** an Exceptions-based CNAM routing database (ECD) **524,** and a default range-based CNAM Global Title Translation database (GTT) 526. It will be appreciated that CNAM routing translation system **523** is discussed herein as including both an ECD database process and a range-based CNAM GTT process. However, such an internal routing translation system configuration is simply one of many possible system implementations. For instance, CNAM routing translation system could be structured to include only a single database process, or conversely could be structured so as to be comprised of more than two database processes. In any event, the particular CNAM routing translation system that is implemented is critical to the operation of the CNAM routing node of the present invention that is discussed and described herein.

SCCP process **520** provides the facilities necessary to receive incoming SCCP-type message packets from the in-bound LIM **502.** The SCRC process **522** is responsible for discrimination of signaling messages at the SCCP level, and for the directing of incoming SS7 message packets to the CNAM routing translation system **523,** which subsequently directs the packet to either the ECD database process **524** or the CNAM Global Title Translation (GTT) database process **526.** CNAM CNAM routing translation system **523** is also responsible for modification of the message packets to include routing information returned by the ECD or CNAM GTT database processes **524** and **526,** respectively. SS7 message packets leaving CNAM routing translation system **523** are received and further processed by an HMRT process **528.** The HMRT process **528** is responsible for the external routing of SS7 message packets that do not require additional processing by the CNAM routing node **500.** That is, the HMRT process **528** determines to which LIM or DCM card an SS7 message packet should be routed for subsequent outbound transmission.

As generally indicated in Figure 3, CRM **508** is in communication with and serviced by a Local Service Management System (LSMS) **530.** In general, an LSMS system is also in communication with a Number Portability Administration Center (NPAC). As such, an LSMS acts as the interface between carrier networks and the NPAC. In a typical implementation, an LSMS receives and stores ported subscriber information from the NPAC and then, in turn, is responsible for downloading this ported subscriber information to all subscribers which it services. As the interaction between an NPAC and an LSMS is not particularly relevant to the present invention, a detailed discussion of such NPAC-LSMS system functionality will not be presented herein. It should suffice to state that the LSMS **530** maintains the CNAM routing translation system **523** with the most current ported subscriber information available at any given time. That is, the LSMS **530** provides the carrier that owns CNAM routing node **500** with updated information regarding the carrier's current customer base. As such, CNAM routing translation system **523** provides the carrier with the information necessary to determine whether an incoming CNAM query is associated with a customer serviced by the carrier or whether the customer is being serviced by a competing carrier.

It should be appreciated that outgoing SS7 message packets routed through the DCM **510** will be transmitted out of the CNAM routing node **500** and into an Internet Protocol (IP) network **400.** As the SS7 communication protocol and the IP communication protocol are not inherently compatible, all SS7 message packets that are to be sent into the IP network **400** are first encapsulated within an IP routing envelope prior to transmission. This IP encapsulation is performed by the IP Level 1 & 2 process **542.** The IP encapsulation processing is the IP protocol equivalent of the processing performed by SS7 MTP level 1-2 layer process **512** of the LIM module **502.** Preferred packet formats for encapsulating various types of SS7 messages in IP packets is described in internet Engineering Task Force (IETF) INTERNET DRAFT entitled Transport Adapter Layer Interface, May 28, 1999, the disclosure of which is incorporated herein by reference in its entirety.

Once again, the description of LIM and DCM sub-components provided herein is limited to those sub-components that are relevant to the sample implementation scenarios illustrated and discussed herein. For a comprehensive discussion of additional LIM and DCM operations and functionality, the above-referenced Tekelec publications can be consulted.

As stated above, one problem associated with CNAM information acquisition by a carrier involves the porting of subscribers in to and out of the carrier's network. Consequently knowledge of which customers are owned by the carrier becomes an issue when CNAM must be obtained. As such, it will be appreciated that one of the primary objectives of the CNAM routing node according to an embodiment of the present invention is to provide a method by which a network operator can quickly and easily direct CNAM query messages associated with a given calling party to a specific CNAM database. More particularly, it is an object of the present invention to provide a carrier with a method of directing all CNAM queries associated with customers that are serviced by the carrier to a local CNAM database that is owned by the carrier. At the same time, it is an object of the present invention to provide a carrier with a method of directing all CNAM queries associated with customers that are not serviced by the carrier to a national CNAM database that is not necessarily owned by the carrier. To facilitate such CNAM query message routing, the CNAM routing node of the present invention employs a pair of complimenting routing databases which effectively map a calling party telephone number associated with a CNAM query to the network address of the appropriate CNAM database node. These databases, described above, are referred to as the Exceptions-based CNAM routing Database (ECD), and the CNAM GTT database.

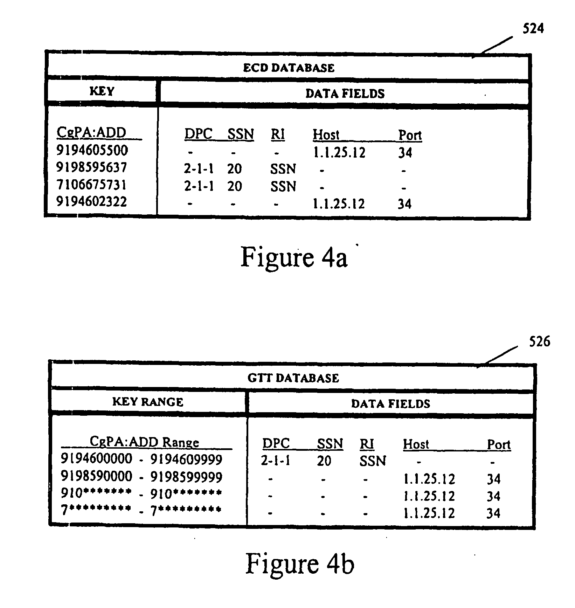

Figures 4a and 4b are database structure diagrams which are intended primarily to illustrate the key or indexing structures of the ECD and CNAM GTT databases **524** and **526,** respectively. It should be appreciated that the ECD and CNAM GTT database record structures and pseudo data presented in Figures 4a and 4b, while supportive of the examples shown in Figure 3, are merely illustrative of the basic information necessary to perform the required CNAM routing data lookups. In practice, the actual database record structures and overall database design may vary according to particular implementation requirements.

The complimentary database access scheme employed by the CNAM routing node of the present invention requires that the CNAM GTT database **526** maintain a set of range or block-based routing rules while the ECD database **524** contains exceptions to the block-based routing rules. Once again, this concept is generally illustrated in Figures 4a and 4b. By range or block-based routing rules, it is meant that a block or range of telephone numbers are associated with the network address of a particular CNAM SCP.

Referring to Figure 4b, the CNAM GTT or range-based CNAM database **526** includes key fields in the left hand column and data fields in the right hand column. The key fields represent ranges of telephone numbers associated with a particular CNAM database node. For example, the first key field specifies a minimum telephone number of 9194600000 and a maximum telephone number of 9194609999. The data fields corresponding to this range include a Point Code (PC) of 2-1-1, a Subsystem Number (SSN) of 20, and a Routing Indicator (RI) value indicative of RT-ON-SSN for the CNAM SCP network element corresponding to the first range in the key field. The data included in the data fields are merely illustrative of data fields that can be included in range-based CNAM GTT database **526.** Similar key fields and data fields are shown for other network elements.

Referring to Figure 4a, the ECD or exceptions-based CNAM database **524** contains entries that are exceptions to the entries in the range-based database **526.** In Figure 4a, the left-hand column includes key values for each entry, and the right hand column includes data fields for each entry. The first entry includes a key field value of 9194605500. The data fields corresponding to the first key field value include an Internet Protocol (IP) host name of 1.1.25.12 and port value of 34. These data fields are merely illustrative of the data fields that can be included in the exception-based or ECD database **524.** The remaining entries in the database **524** contain similar data for other network elements.

The dual database architecture employed in one embodiment of the CNAM routing translation system **523** of the CNAM routing node of the present invention provides a number of subtle benefits to the network operator. For example, the complimenting nature of the two databases optimally minimizes routing database memory resource requirements. Furthermore, the task of maintaining and administering the CNAM routing node is greatly simplified, in that only exceptions to the conventional block-based routing rules must be explicitly entered in the ECD database. If such were not the case and, for example, a particular carrier serviced 500,000 customers, then that carrier would be required to create and store at least one unique routing record for each of the 500,000 customers. The exceptions-based structure of the CNAM routing translation system 523 simply requires, in such a case, that the carrier create and store individual routing records in the ECD database only for those customer telephone numbers that do not adhere to the range or block-based rules that have been specified in the CNAM GTT database. For example, if a new customer is ported in to a carrier's network from a competitor's network, the customer's telephone number may be an exception to the block based rules provisioned in the CNAM GTT database. In such a case, the new customer's telephone number would be provisioned in the ECD. In the special case where all of a carriers customer telephone numbers adhere to the block-based rules specified in the CNAM GTT database, the ECD database would be empty. At the other extreme, where all of a carrier's customer telephone numbers do not adhere to the general block-based rules specified in the CNAM GTT database, the ECD database would contain at least one entry for each of the carrier's assigned telephone numbers.

With regard to routing node translation services, the parameter generally used either directly or indirectly to determine the type of translation service (e.g., CNAM service or other translation services) required by an incoming signaling message is an SCCP layer parameter, Translation Type (TT). It will be appreciated that other parameters included within a CNAM query message such as, a Routing Indicator (RI), a Global Title Indicator (GTI) parameter, a Numbering Plan (NP) parameter, and a Nature of Address Indicator (NAI) parameter may also be used to determine whether CNAM routing service is indicated. These parameters, their meanings within the context of an SS7 communication network, and their range of values are well known to those skilled in the art and consequently will not be discussed in detail. It should suffice to say that the preferred embodiment of the CNAM routing node of the present invention relies on some or all of these parameters to determine the required translation service.

From an operational standpoint, signaling messages requiring routing database processing are first serviced by the exception-based ECD database. That is, a lookup is performed in the ECD database based on the telephone number associated with the calling party. In the event that a match is located in the ECD database, the appropriate routing data is returned by the ECD database and the query signaling message packet is modified accordingly before further routing. No secondary search of the block-based CNAM GTT database is required in such a case. However, in the event that no match is located in the ECD database, a secondary search is performed in the range-based CNAM GTT database.

### Exception-based CNAM Database Translation Process

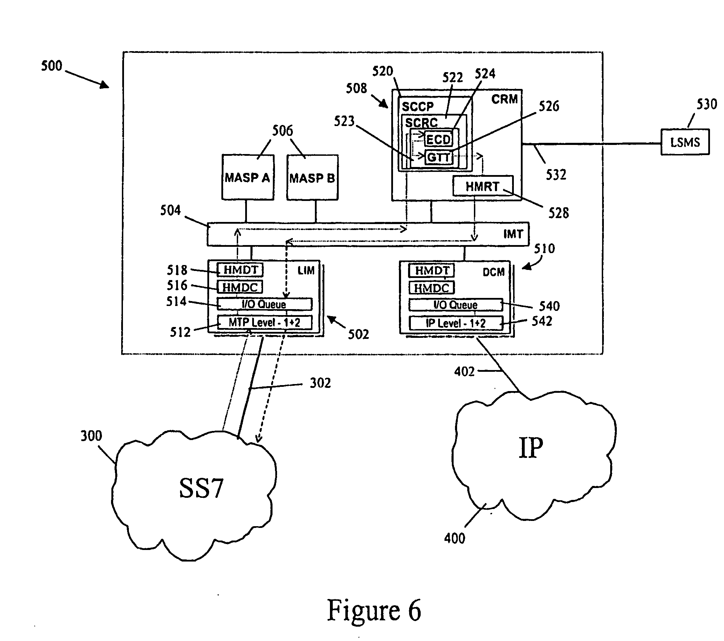

Figures 3 and 6 generally illustrate the two routing database access scenarios briefly described above. More particularly, Figure 3 diagrams the case where the initial ECD database lookup finds a match and hence no secondary CNAM GTT database search is required. To illustrate this case, the path of a typical SS7 CNAM query message is traced from an SS7 network **300,** through the CNAM routing node **500** and in to an associated Internet Protocol (IP) network **400,** with the path being indicated by a dashed line.

Beginning at the SS7 network **300,** a CNAM query message arrives at the CNAM routing node **500** via an SS7 communication link **302.** It will be appreciated that in a preferred embodiment, all incoming CNAM query messages are addressed to either a true point code or capability point code of the CNAM routing node. While such a CNAM query message addressing scheme offers distinct provisioning advantages for the carrier operating the CNAM routing node, it is not essential for operation of the node.

The signaling message is received within the CNAM routing node **500** by LIM **502.** SS7 MTP Level 1 and 2 processing is performed on the incoming signaling message packet by the MTP Level 1 and 2 process **512.** With MTP Level 1 and 2 processing complete, the signaling message packet is temporarily buffered in the I/O queue **514** before being passed up the stack to the MTP Level 3 HMDC process **516.** The HMDC process **516** examines the signaling message packet and determines whether the packet requires further processing at the CNAM routing node **500.** In the example shown in Figure 3, it is assumed that the HMDC process **516** determines that further processing of the signaling message packet is required, and the packet is subsequently passed to the HMDT process **518.** The HMDT process **518** examines the packet and determines, based on the type of further processing that is required, which distributed processing module connected to the IMT bus **504** should next receive the packet. In this case, the HMDT process **518** determines that the signaling message should be forwarded to CRM module **508** for ECD translation service. The signaling message packet is then placed on the high speed IMT bus **504** and sent to CRM **508.**

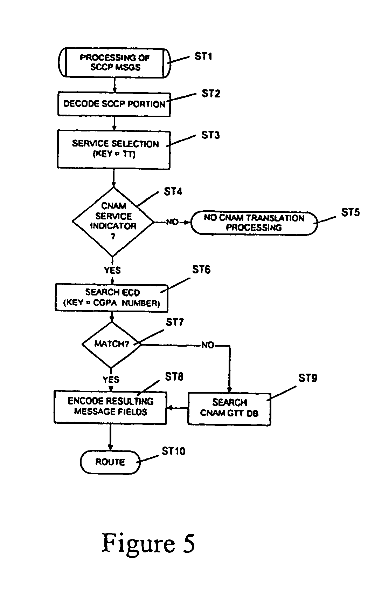

A detailed flow chart of CRM/SCCP related processing steps is presented in Figure 5, and may be used in conjunction with the schematic diagram shown in Figure 3 and the sample CNAM Exception and CNAM GTT databases shown in Figures 4a and 4b, respectively, to better understand the ECD and CNAM GTT database lookup methodology.

In the example presented in Figure 3 and procedurally described in Figure 5, it is assumed that a CNAM query has been formulated and launched by an SSP with regard to a call setup operation involving a calling party (CgPA) with a telephone number of (919) 460-5500.

Referring to Figure 5, in step **ST1,** the signaling message arrives at the CRM card **508** and SCCP process 520 receives the packet. Within SCCP process **520,** the message packet is passed to the SCRC controller process **522.** In steps **ST2** and **ST3,** respectively, the SCRC process **522** decodes and examines packet content information contained within the signaling message header in order to establish which type of translation service is required. More particularly, the Translation Type (TT) parameter contained within the signaling message packet is analyzed to determine whether CNAM translation service is required. As indicated in steps **ST4** and **ST5,** respectively, if it is determined that non-CNAM translation service is required, no further CNAM routing translation processing is performed. Instead, the message may be processed by other provisioned systems within the CNAM routing node of the present invention, and subsequently routed from the node **500.** However, in the scenario presented in Figure 3, the Translation Type (TT) parameter contained within the query message is interpreted as indicating the need for a CNAM translation.

In step **ST6,** the message is passed generally into the CNAM routing translation system **523** and subsequently on to ECD database **524** where a search is performed using the' telephone number associated with the calling party (i.e., 9194605500) as at least a portion of the search key. If a match is not found in the ECD database **524,** the packet is passed to the CNAM GTT database 526 for processing, as shown in steps **ST7** and **ST9,** respectively. However, in the example presented in Figure 3, a match is found in the ECD database **524,** as indicated by the fact that there is an entry in the ECD database **524** (Figure 4a) corresponding to the message's CgPA telephone number value of 9194605500. It will be appreciated from Figure 4b that the range or block-based CNAM routing rules contained in CNAM GTT database **526,** indicate that all telephone numbers within the range 9194600000 to 9194609999 would ordinarily be serviced or owned by the carrier, and as such all CNAM queries associated with a CgPA telephone number with this range would be routed to a local CNAM database owned by the carrier. More particularly, all telephone numbers within this range would be routed to a carrier owned, local CNAM database that is identified by an SS7 point code (PC) of 2-1-1 and a Subsystem Number (SSN) of 20. However, as the CgPA telephone number 9194605500 has been provisioned in the ECD database **524,** it is implied that the calling party has been ported out of the carrier's network and is currently being service by one of the carrier's competitors. As such, it will be further appreciated that the CNAM query message routing instructions associated with the 9194605500 entry in the ECD database **524** indicate that CNAM query message should be routed to a national CNAM database that has a destination internet Protocol address corresponding to a Host name of 1.1.25.12 and a Port of 34.

Returning to Figure 5, the IP routing address data returned by the ECD database process **524,** a Host name of 1.1.25.12 and Port of 34, is subsequently encoded within the signaling message packet, as indicated by step **ST8.** Once again, it will be appreciated that the routing information, Host name: 1.1.25.12 and Port: 34, returned by the ECD database **524** effectively constitutes the IP network address of a national CNAM database. Where, a national CNAM database is a database system comprised of one or more database applications and computing platforms that are configured to include CNAM-type information for substantially all telecommunication customers in a country. It will be appreciated, however, that such a national CNAM database could be configured to include CNAM data for substantially all telecommunications customers from more than one country.

Returning now to Figure 3, it will be appreciated that following the successful ECD database lookup as described in detail above, the modified signaling message packet is next passed to the HMRT process **528.** Once again, the HMRT process **528** determines to which LIM or DCM card the packet should be routed for subsequent transmission to the destination CNAM database node. In this case, the HMRT process **528** determines that the link connecting the CNAM routing node **500** and the destination CNAM database node is located on DCM **510.** Consequently, the modified CNAM query message packet is internally routed across the IMT bus **504** to DCM **510** and, more particularly, to the I/O queue **540.** Eventually, the modified message packet is passed from the I/O queue **540** and on to IP Level 1 & 2 process **542,** where the SS7 packet is encapsulated within an IP routing envelope. The IP encapsulated SS7 packet is then transmitted into the associated IP network **400** via the IP signaling link **402** (Step **ST10** in Figure 5). In this example, the IP encapsulated SS7 packet is addressed and consequently routed through the IP network **400** to the final destination, a national CNAM database which can be owned by the service provider or owned and operated by an independent third party.

### Default CNAM GTT Translation

Turning now to Figure 6, the example message flow scenario presented in this diagram illustrates the case where an initial ECD database lookup fails to find a match and hence a secondary or default CNAM GTT database search is required. The path of a typical CNAM database SS7 query message is traced from the SS7 network **300,** through the CNAM routing node **500** and in to the destination IP network **400.** Once again, the signaling message pathway is indicated by a dashed line. In the example presented in Figure 6 and procedurally described in Figure 5, it is assumed that a CNAM query has been formulated and launched by an SSP with regard to a call setup operation involving a calling party (CgPA) with a telephone number of (919) 460-2000.

Beginning at the SS7 network **300,** a CNAM query message arrives at the CNAM routing node **500** via an SS7 communication link **302.** Once again, it will be appreciated that in a preferred embodiment, all incoming CNAM query messages are addressed to either a true point code or capability point code of the CNAM routing node. While such a CNAM query message addressing scheme offers distinct provisioning advantages for the carrier operating the CNAM routing node, it is not essential for operation of the node.

As processing of the incoming signaling message packet on the LIM **502** in this scenario is identical to that described for the scenario illustrated in Figure 3 and described above, a detailed discussion of LIM processing will not be repeated. Instead, it will be appreciated that the incoming signaling message is received within the CNAM routing node **500** by LIM **502** and that the message packet is subsequently examined and routed via IMT bus 504 to CRM card **508** for further processing.

Again, the detailed flow chart of CRM/SCCP related processing steps presented in Figure 5 can be used in conjunction with the schematic diagram shown in Figure 6 to better understand the ECD and GTT database lookup methodology. Referring to Figures 5 and 6, in step **ST1,** the signaling message arrives at the CRM card **508** and SCCP process 520 receives the packet. Within SCCP process **520,** the message packet is passed to the SCRC controller process **522.** In steps **ST2** and **ST3,** respectively, the SCRC process **522** decodes and examines packet content information contained within the signaling message header in order to establish which type of translation service is required. More particularly, the Translation Type (TT) parameter contained within the signaling message packet is analyzed to determine whether a CNAM or a non-CNAM GTT translation service is required **(ST4).** Once again, as in the preceding example, a TT value contained in the message is interpreted as indicating the need for a CNAM routing translation.

In step **ST6,** the message is passed into the CNAM routing translation system **523** and subsequently on to the ECD database **524,** where a search is performed using the telephone number associated with the calling party (i.e., 9194602000) as at least a portion of the search key. If a match is not found in the ECD database **524,** the packet is passed to the CNAM GTT database **526** for default routing address translation processing, as shown in steps **ST7** and **ST9,** respectively. Such is precisely the case in the example presented in Figure 6, as a match is not found in the ECD database **524.** That is, there is not an entry in the ECD database **524** (Figure 4a) corresponding to the message's CgPA telephone number value of 9194602000. It will be appreciated from Figure 4b that the range or block-based CNAM routing rules contained in CNAM GTT database **526,** indicate that all telephone numbers within the range 9194600000 to 9194609999 would ordinarily be serviced or owned by the carrier, and as such all CNAM queries associated with a CgPA telephone number with this range would be routed to a local CNAM database owned by the carrier. More particularly, all telephone numbers within this range would be routed to a carrier owned, local CNAM database that is identified by an SS7 point code (PC) of 2-1-1 and a Subsystem Number (SSN) of 20. As the CgPA telephone number 91946020000 has not been provisioned in the ECD database **524,** it is implied that the calling party is owned or serviced by the carrier and not one of the carrier's competitors. As such, it will be further appreciated that since the CgPA telephone number (9194602000) falls within a range of provisioned telephone numbers stored in the CNAM GTT database 526, the CNAM query message should be routed to a local, carrier owned, CNAM database that has a destination SS7 address corresponding to a point code (PC) of 2-1-1 and a Subsystem (SSN) of 20. The SS7 routing address data returned by the CNAM GTT database process **526,** a PC of 2-1-1, a SSN of 20, and a Routing Indicator of RT-ON-SSN are subsequently encoded within the signaling message packet, as indicated by step **ST8.** Once again, it will be appreciated that the routing information, PC: 2-1-1 and SSN: 20, returned by the CNAM GTT database **526** effectively constitutes the SS7 network address of a local CNAM database. Where, a local CNAM database is a database system comprised of one or more database applications and computing platforms that are configured to include CNAM-type information for substantially all telecommunication customers serviced by a particular carrier. It will be appreciated, however, that such a local CNAM database could be configured to include CNAM data for substantially all telecommunications customers associated with multiple carriers.

Returning now to Figure 6, it will be appreciated that following the failed ECD database lookup and successful CNAM GTT database lookup as described in detail above, the modified signaling message packet is next passed to the HMRT process **528.** Once again, the HMRT process **528** determines to which LIM or DCM card the packet should be routed for subsequent transmission to the destination CNAM database node. In this case, the HMRT process **528** determines that the link connecting the CNAM routing node **500** and the destination CNAM database node is located on LIM **502.** Consequently, the modified CNAM query message packet is internally routed across the IMT bus **504** to LIM **502** and, more particularly, to the I/O queue **514.** Eventually, the modified message packet is passed from the I/O queue **514** and on to MTP Level 1 & 2 process **512,** where the SS7 packet is then transmitted into the associated SS7 network **400** via the SS7 signaling link **302.** In this example, the SS7 CNAM query packet is addressed and consequently routed through the SS7 network **300** to a final destination, more specifically, a local CNAM database (ST10) co-located and/or owned by the service provider.

### Sample CNAM Access Configurations And Associated Message Flows

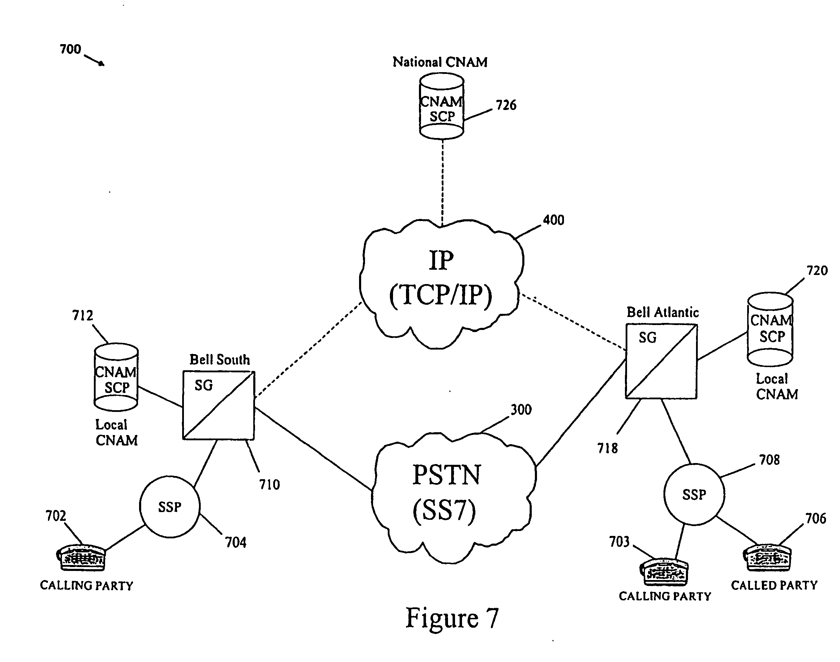

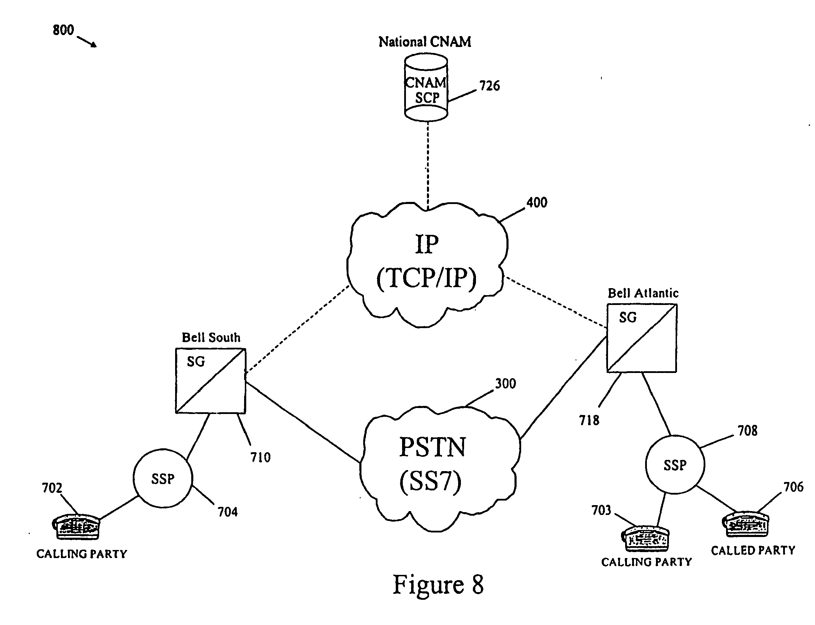

Shown in Figures 7 and 8 are simplified network diagrams that generally illustrate two possible network configurations which could be employed with a CNAM routing node of the present invention to provide CNAM delivery service to carrier customers.

More particularly, presented in Figure 7 is a telecommunications network CNAM service configuration that allows carriers to access a local CNAM database in the course of providing CNAM service associated with calling parties that are, in fact, their own customers. In the event that CNAM service is required for a calling party that is not serviced by the carrier, all associated CNAM queries are directed to a national CNAM database via an Internet Protocol network.

As such, Figure 7 includes a telecommunication network, generally indicated by the numeral **700.** Explicitly shown in Network **700** is a calling party (CgPA) **702** that is serviced by a Service Switching Point (SSP) **704,** a CgPA **703** that is serviced by SSP **708,** and a called party (CdPA) **706** that is similarly serviced by an SSP **708.** Network **700** further includes a number of Signaling Gateways (SGs) which are owned and operated by different service providers. More particularly, network **700** includes SGs **710** and **718** that are owned by Bell South and Bell Atlantic, respectively. Both of these SGs are embodiments of the CNAM routing node of the present invention and are connected either directly or indirectly via Signaling System 7 (SS7) links that collectively comprise the Public Switched Telephone Network (PSTN) SS7 network **300.** As further indicated in Figure 7, SG **710** is locally connected to an SCP node **712** that contains CNAM-type information associated with customers serviced by Bell South. Similarly, SG **718** is locally connected to an SCP node **720** that contains CNAM-type information associated with customers serviced by Bell Atlantic. It will also be appreciated that both SG **710** and SG **718** are connected to a national CNAM database **726** via an Internet Protocol network **400.**

In the example illustrated in Figure 7, it will be appreciated that the calling party **702** is serviced by a carrier (Bell South) other than the carrier (Bell Atlantic) servicing the calling party **703** and called party **706.** As such, it will be appreciated that if calling party **702** placed a call to called party **706,** the carrier (Bell Atlantic) servicing called party **706** would ordinarily be required to send a CNAM query to the carrier (Bell South) servicing calling party **702,** requesting CNAM information. Once again, in such a scenario, the carrier (Bell Atlantic) requesting the CNAM information for calling party **702** would likely be charged a fee for obtaining the required CNAM information.

However, in such a scenario, the configuration generally illustrated in Figure 7 allows the carrier (Bell Atlantic) servicing the called party **706** to route a CNAM query via CNAM equipped SG **718** and IP network **400** to the national CNAM database **726** to obtain the desired CNAM information associated with calling party **702.** While, in practice, the carrier (Bell Atlantic) servicing called party **706** might be charged a fee for the calling party CNAM information by the national CNAM database operator, it is likely that the fee structures offered by the national CNAM operator would be more favorable than those offered by the competing carrier (Bell South).

It will also be appreciated from the network configuration shown in Figure 7 that, in the event that a call is placed between calling party **703** and called party **706,** both of which are serviced by the same carrier (Bell Atlantic), a national CNAM database query is not required. Instead, in such a call scenario, the carrier (Bell Atlantic) servicing both the calling and called parties **703** and **706,** respectively, simply directs the necessary CNAM query via the CNAM equipped SG **718** to a local CNAM database **720** that contains information related to all of the carrier's customers. As such, in this scenario, the carrier (Bell Atlantic) is able to completely avoid any third-party fees associated with obtaining CNAM information.

Alternatively, carriers may choose not to maintain their own local CNAM databases, as generally indicated in Figure 8. As such, Figure 8 includes a telecommunication network, generally indicated by the numeral **800.** Explicitly shown in Network 800 is a calling party (CgPA) **702** that is serviced by a Service Switching Point (SSP) **704,** a CgPA **703** that is serviced by SSP **708,** and a called party (CdPA) **706** that is similarly serviced by an SSP **708.** Network **800** further includes a number of Signaling Gateways (SGs) which are owned and operated by different service providers. More particularly, network **700** includes SGs **710** and **718** that are owned by Bell South and Bell Atlantic, respectively. Both of these SGs are embodiments of the CNAM routing node of the present invention and are connected either directly or indirectly via Signaling System 7 (SS7) links that collectively comprise the Public Switched Telephone Network (PSTN) SS7 network **300.** As further indicated in Figure 8, both SG **710** and SG **718** are also connected to a national CNAM database **726** via an Internet Protocol network **400.**

In such a scenario, all CNAM queries, regardless of the carrier that services a calling party, are routed by the CNAM equipped SGs **710** and **718** to the national CNAM database **726** via the IP network **400.** For instance, in such a network configuration, it will be appreciated that, in the event that a call is placed between calling party **703** and called party **706,** both of which are serviced by the same carrier (Bell Atlantic), the resulting CNAM query message received by SG **718** is simply routed to the national CNAM database **726.**

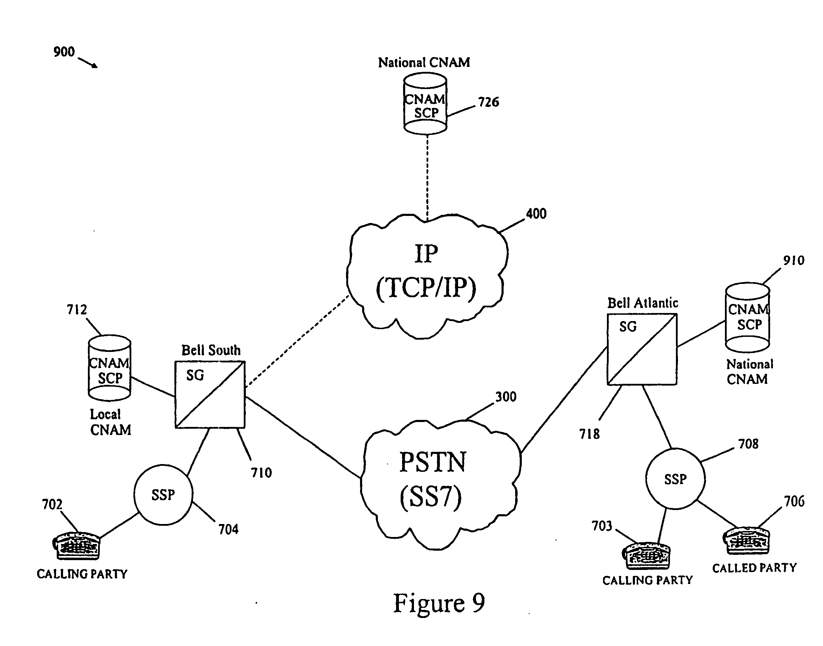

It will also be appreciated that a carrier may choose to maintain their own copy of a national CNAM database instead of relying on a remotely located national CNAM database owned and operated by a third party. Such an example network configuration is generally indicated in Figure 9. As such, Figure 9 includes a telecommunication network, generally indicated by the numeral **900.** Explicitly shown in Network **900** is a calling party (CgPA) **702** that is serviced by a Service Switching Point (SSP) **704,** a CgPA **703** that is serviced by SSP **708,** and a called party (CdPA) **706** that is similarly serviced by an SSP **708.** Network **900** further includes a number of Signaling Gateways (SGs) which are owned and operated by different service providers. More particularly, network **900** includes SGs **710** and **718** that are owned by Bell South and Bell Atlantic, respectively. Both of these SGs are embodiments of the CNAM routing node of the present invention and are connected either directly or indirectly via Signaling System 7 (SS7) links that collectively comprise the Public Switched Telephone Network (PSTN) SS7 network **300.** As further indicated in Figure 9, SG **710** is connected to a national CNAM database **726** via an Internet Protocol network **400** while SG **718** employs no such connection. Instead SG **718** is connected to a co-located national CNAM database **910,** which is owned by and operated by Bell Atlantic, while SG **710** is further connected to a local CNAM database **712** that is owned and operated by Bell South.

In such a scenario, all CNAM queries received by SG **718,** regardless of the carrier that services a calling party, are routed by the CNAM equipped SG **718** to the national CNAM database **910.** For instance, in such a network configuration, it will be appreciated that, in the event that a call is placed either from calling party **702** or **703,** to called party **706,** which may be serviced by the same carrier (Bell Atlantic) or different carriers (Bell South and Bell Atlantic), the resulting CNAM query message received by SG **718** is simply routed to the co-located, Bell Atlantic-owned national CNAM database **910** and consequently, no third party charges are assessed to Bell Atlantic for national CNAM database access.

### National CNAM Database

According to another embodiment, the present invention includes a national CNAM database. As used herein, a national CNAM database is a CNAM database that contains calling name information for the subscribers of multiple service providers, e.g., all of the service providers in a given country. The calling name information may be indexed by calling party directory numbers. That is, a national CNAM database according to an embodiment of the present invention may be comprised of a plurality of database records. Each record includes a first data field containing a calling party directory number, such as 9195551212. Each record also contains one or more second data fields containing calling name information. Examples of calling name information that may be included in the second data fields is as follows. Very simply put, the calling name database translates the Calling Party's telephone number, to the telephone numbers subscriber (the name associated with that telephone number). For instance, (919) 555-1212, could translate to John Smith.

From a hardware perspective, a calling name database may be stored in a high-speed memory device, such as an SRAM memory device to allow efficient processing of database queries. Storing database entries in a high-speed memory is particularly important in a national CNAM database in light of the number of queries that may be directed to the database. The calling name database may also include front end processing circuitry for processing queries and accessing the database. Such processing circuitry typically includes a general-purpose computer.

From a software perspective, a national calling name database may include a CNAM search engine for searching database records for a record corresponding to a calling party directory number and query processing circuitry for processing TCAP queries and formulating TCAP responses. Because the present embodiment comprises a national CNAM database, a given service provider need only query one database, preferably owned by the service provider, in order to obtain calling name information for a given call. For example, in the embodiment illustrated in Figure 9, national CNAM database **910** is connected to signaling gateway **718** and both nodes are owned by Bell Atlantic. Thus, when a call from any calling party number within the country is received by SSP **708,** a TCAP query is generated to national CNAM database **910.** There is no need to query any other CNAM database because CNAM database **910** contains CNAM information for all subscribers in a given country. As a result, in this example, Bell Atlantic, the owner of the database is not required to pay access charges for obtaining CNAM information from another service provider's database.

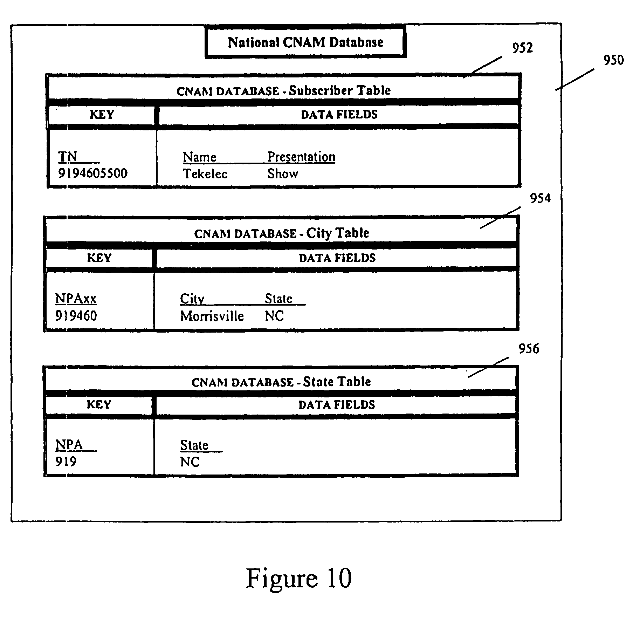

Figure 10 is a block diagram of a national CNAM database according to a preferred embodiment of the present invention. In Figure 10, National CNAM database **950** includes three tables: a subscriber table **952,** a city table **954,** and a state table **956.** Each of the tables **952, 954,** and **956** includes a key field and one or more data fields. For example, in subscriber table **952,** the key field of each entry includes a calling party directory number. The data fields in table **952** include a calling party name field for storing a calling party name, such as "Tekelec" and a presentation indicator field for storing a presentation indicator value for indicating whether the name is to be displayed to the end user. In the illustrated example, the presentation indicator value is "show," indicating that the name in the calling party name field is to be displayed. In an alternative example, the presentation indicator field may contain a value of "hide" to indicate that the calling party name is not to be displayed to the called party. Although only a single example subscriber entry is illustrated, it is understood that subscriber table **952** may include calling name information for all or substantially all of the subscribers in a given country.

Each entry in city table **954** of national CNAM database **950** includes a key field that stores a numbering plan address and a data field that stores a calling party city and state. In the illustrated example, the key field stores a numbering plan address of 919460 and the data field stores a city and state of Morrisville, NC. City table **954** is accessed when a lookup in subscriber table **952** fails to locate a subscriber corresponding to a calling party directory number. Although only a single entry is illustrated in city table **954,** it is understood that city table **954** may include entries for all or substantially all of the cities in a given country.

Each entry in state table **956** of national CNAM database **950** contains a key field that stores a numbering plan address and a data field that stores a state corresponding to the numbering play address. In the illustrated example, the key field stores an NPA value of **919** and the data field stores a state of NC. State table **956** when lookups in both subscriber table 952 and state table **956** fail to return an entry corresponding to the calling party number. Although only a single entry is illustrated in state table **956,** it is understood that state table **956** may include entries for all or substantially all of the states or provinces in a given country.

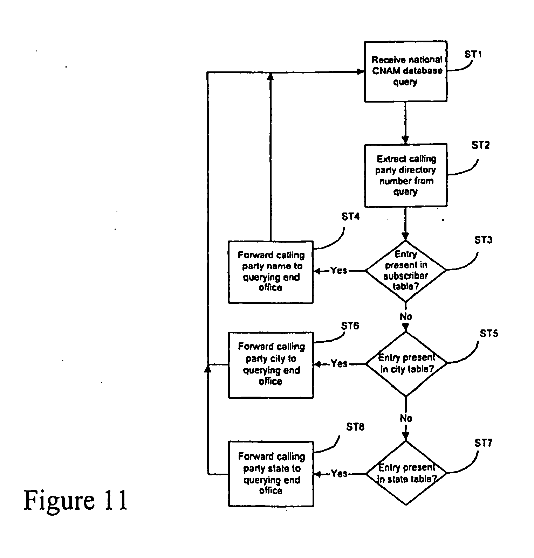

Figure 11 illustrates exemplary steps that may be performed by a search engine operatively associated with national CNAM database **950** illustrated in Figure 10. In step **ST1,** the search engine receives a query for calling party name information. For example, the query may originate from a called party end office and be routed through a calling name database routing node according to an embodiment of the present invention. In step **ST2,** the search engine extracts a calling party directory number from the query.

In step **ST3,** the search engine searches the subscriber table in the calling name database and determines whether the table contains an entry corresponding to the calling party directory number. In step **ST4,** if the subscriber table contains a calling party directory number corresponding to the calling party directory number, the search engine extracts the calling name information and sends the information to the querying end office to be displayed to the end user. In this example, it is assumed that the calling name information does not indicate that the calling name information is to be hidden from the end user.

If the search engine fails to locate a record corresponding to the calling party directory number in the subscriber table, in step **ST5** the search engine then determines whether an entry corresponding to at least a portion of the directory number is present in the city table. If the search engine locates a corresponding entry in the city table, in step **ST6,** the search engine returns the calling party city to the querying end office for display to the called party.

If the search engine fails to locate an entry in the city table, the search engine performs a lookup in the state table. Such a lookup may be performed using only the area code from the calling party directory number. In step **ST7,** the search engine determines whether an entry corresponding to the calling party area code is present in the state table. If such an entry is present, in step **ST8,** the search engine returns the calling party state to the querying end office for display to the called party. If such an entry is not present, in step **ST9,** the search engine returns an error message to the querying end office indicating that calling party name information was not found.

Dividing the national CNAM database into three levels enables the search engine to provide calling name information to the end user, even if an entry is not present at one or more levels. Such information may be useful to the end user in screening unwanted calls, identifying incoming long distance calls, and identifying the location of the calling party.

It will be understood that various details of the invention may be changed without departing from the scope of the invention. Furthermore, the foregoing description is for the purpose of illustration only, and not for the purpose of limitation―the invention being defined by the claims.

## Claims

1. A system for routing signaling messages associated with a request for calling name service comprising:
(a) a computer-readable medium having stored thereon a national CNAM database, the national CNAM database comprising:
(i) a plurality of first data fields containing directory numbers of subscribers of a plurality of telephone service providers in a given country; and
(ii) a plurality of second data fields respectively corresponding to the first data fields containing calling name information for each of the subscribers; and
(b) an Internet Protocol network, wherein CNAM queries are routed to the national CNAM database through the Internet Protocol network regardless of the carrier that services a calling party associated with each CNAM query.

2. The system of claim 1, wherein the plurality of first data fields contain directory numbers for subscribers of substantially all of the telephone network service providers in the country.

3. The system of claim 2 wherein the calling name information contained in each of the plurality of second data fields includes a name for a calling party.

4. The system of claim 2 wherein the calling name information contained in each of the plurality of second data fields includes a city for a calling party.

5. The system of claim 2 wherein the calling name information contained in each of the plurality of second data fields includes a state for a calling party.

6. The system of claim 2 wherein the calling name information contained in each of the plurality of second data fields includes a province for a calling party.

7. The system of claim 1 wherein the national CNAM database includes:
(a) a subscriber table containing name information accessible using at least a first portion of a directory number;
(b) a city table containing city information accessible using at least a second portion of the calling party directory number different from the first portion;
(c) a state table containing state information accessible using at least a third portion of the calling party directory number different from the first and second portions; and
(d) a search engine operatively associated with the subscriber, city, and state tables for responding to queries for calling name information and extracting information from the tables based on the queries.

8. The system of claim 7 wherein the search engine is adapted to search the subscriber table using the first portion of the calling party directory number, and, in response to failing to locate an entry in the subscriber table, searching the city table using the second portion of the calling party directory number.

9. The system of claim 8 wherein the search engine is adapted to search the state table using the third portion of the calling party number in response to failing to locate an entry in the city table.

10. The system of claim 7 wherein the first portion is the entire calling party directory number, the second portion is the first six digits of the calling party directory number, and the third portion is the first three digits of the calling party directory number.

## Patentansprüche

1. System zum Routen von Signalmeldungen, die mit einer Anforderung für einen Anrufernamensdienst verbunden sind, mit:
(a) einem computerlesbaren Medium, auf dem eine nationale CNAM-Datenbank abgelegt ist, wobei die nationale CNAM-Datenbank folgendes umfasst:
(i) eine Vielzahl von ersten Datenfeldern, die Verzeichnisnummern von Anschlussinhabern von Telefonserviceprovidern in einem bestimmten Land enthalten, und
(ii) eine Vielzahl von zweiten Datenfeldern, die jeweils den ersten Datenfeldern entsprechen und Anrufernamensinformationen für jeden der Anschlussinhaber enthalten, und
(b) einem Internet-Protokoll-Netzwerk, in welchem CNAM-Abfragen durch das Internet-Protokoll-Netzwerk zu der nationalen CNAM-Datenbank weitergeleitet werden, ungeachtet des Betreibers, der einen mit jeder CNAM-Abfrage verbundenen anrufenden Anschlussinhaber betreut.

2. System nach Anspruch 1, wobei die Vielzahl von ersten Datenfeldern Verzeichnisnummern für Anschlussinhaber von im Wesentlichen allen der Telefonnetzwerkserviceprovider in dem Land enthält.

3. System nach Anspruch 2, wobei die Anrufernamensinformation, die in jedem der Vielzahl von zweiten Datenfeldern enthalten ist, einen Namen für einen anrufenden Anschlussinhaber enthält.

4. System nach Anspruch 2, wobei die Anrufernamensinformation, die in jedem der Vielzahl von zweiten Datenfeldern enthalten ist, einen Ort für einen anrufenden Anschlussinhaber enthält.

5. System nach Anspruch 2, wobei die Anrufernamensinformation, die in jedem der Vielzahl von zweiten Datenfeldern enthalten ist, einen Staat für einen anrufenden Anschlussinhaber enthält.

6. System nach Anspruch 2, wobei die Anrufernamensinformation, die in jedem der Vielzahl von zweiten Datenfeldern enthalten ist, eine Provinz für einen anrufenden Anschlussinhaber enthält.

7. System nach Anspruch 1, wobei die nationale CNAM-Datenbank umfasst:
(a) eine Anschlussinhabertabelle, die Namensinformationen enthält, die unter Verwendung mindestens eines ersten Teils einer Verzeichnisnummer zugänglich sind,
(b) eine Ortstabelle, die Ortsinformationen enthält, die unter Verwendung mindestens des zweiten Teils einer Verzeichnisnummer des anrufenden Anschlussinhabers zugänglich sind, die sich von dem ersten Teil unterscheidet,
(c) eine Staatentabelle, die Staateninformationen enthält, die unter Verwendung mindestens eines dritten Teils der Verzeichnisnummer des anrufenden Anschlussinhabers zugänglich sind, die sich von den ersten und zweiten Teilen unterscheidet, und
(d) eine Suchmaschine, die mit den Anschlussinhaber-, Orts- und Staatentabellen in Wirkverbindung steht, um auf Abfragen nach Anrufernamensinformationen zu antworten und basierend auf den Abfragen Informationen aus den Tabellen herauszulesen.

8. System nach Anspruch 7, wobei die Suchmaschine geeignet ist, die Anschlussinhabertabelle unter Verwendung des ersten Teils der Verzeichnisnummer des anrufenden Anschlussinhabers zu durchsuchen, und in Erwiderung auf ein Fehlschlagen des Lokalisierens eines Zugangs zur Anschlussinhabertabelle die Ortstabelle unter Verwendung des zweiten Teils einer Verzeichnisnummer des anrufenden Anschlussinhabers durchsucht.

9. System nach Anspruch 8, wobei die Suchmaschine geeignet ist, in Erwiderung auf ein Fehlschlagen des Lokalisierens eines Zugangs zur Ortstabelle die Staatentabelle unter Verwendung des dritten Teils einer Nummer des anrufenden Anschlussinhabers zu durchsuchen.

10. System nach Anspruch 7, wobei der erste Teil die gesamte Verzeichnisnummer des anrufenden Anschlussinhabers ist, der zweite Teil aus den ersten sechs Stellen der Verzeichnisnummer des anrufenden Anschlussinhabers besteht und der dritte Teil aus den ersten drei Stellen der Verzeichnisnummer des anrufenden Anschlussinhabers besteht.

## Revendications

1. Système destiné à l'acheminement de messages de signalisation associés à une requête de service du nom de l'appelant comprenant :
(a) un support lisible par ordinateur sur lequel est enregistrée une base de données nationale CNAM, la base de données nationale CNAM comprenant :
(i) une pluralité de premiers champs de données contenant des numéros d'appel d'abonnés d'une pluralité de fournisseurs de services téléphoniques dans un pays donné; et
(ii)une pluralité de seconds champs de données correspondant respectivement aux premiers champs de données contenant des informations sur le nom de l'appelant pour chacun des abonnés; et
(b) un réseau de protocole internet, dans lequel les requêtes CNAM sont acheminées à la base de données nationale CNAM à travers le réseau de protocole internet indifféremment de l'entreprise de communications gérant un appelant associé à chaque requête CNAM.

2. Système selon la revendication 1, dans lequel la pluralité des premiers champs de données contient des numéros d'appel pour les abonnés d'essentiellement tous les fournisseurs de services du réseau téléphonique dans le pays.

3. Système selon la revendication 2, dans lequel les informations du nom de l'appelant contenues dans chacun de la pluralité des seconds champs de données comprennent un nom pour un appelant.

4. Système selon la revendication 2, dans lequel les informations du nom de l'appelant contenues dans chacun de la pluralité des seconds champs de données comprennent une ville pour un appelant.

5. Système selon la revendication 2, dans lequel les informations du nom de l'appelant contenues dans chacun de la pluralité des seconds champs de données comprennent un état pour un appelant.

6. Système selon la revendication 2, dans lequel les informations du nom de l'appelant contenues dans chacun de la pluralité des seconds champs de données comprennent une province pour un appelant.

7. Système selon la revendication 1, dans lequel la base de données nationale CNAM comprend :
(a) une liste d'abonnés contenant des informations sur les noms accessibles à l'aide d'au moins une première partie d'un numéro d'appel ;
(b) une liste de villes contenant des informations sur les villes accessibles à l'aide d'au moins une seconde partie du numéro de l'appelant différente de la première partie
(b) une liste d'états contenant des informations sur les états accessibles à l'aide d'au moins une troisième partie du numéro de l'appelant différente des première et seconde parties;
(d) un moteur de recherche associé de manière opérationnelle aux listes d'abonnés, aux listes des villes et des états pour répondre aux requêtes sur les informations du nom de l'appelant et extraire les informations à partir des listes basées sur les requêtes.

8. Système selon la revendication 7, dans lequel le moteur de recherche est prévu pour rechercher la liste d'abonnés à l'aide de la première partie du numéro d'appel de l'appelant, et, en cas d'échec, de localiser une entrée dans la liste d'abonnés, de rechercher la liste de villes à l'aide de la seconde partie du numéro d'appel de l'appelant.

9. Système selon la revendication 8, dans lequel le moteur de recherche est prévu pour rechercher la liste d'états à l'aide de la troisième partie du numéro de l'appelant, en cas d'échec, de localiser une entrée dans la liste de villes.

10. Système selon la revendication 7, dans lequel la première partie est le numéro d'appel entier de l'appelant, la seconde partie sont les six premiers chiffres du numéro d'appel de l'appelant, et la seconde partie sont les trois premiers chiffres du numéro d'appel de l'appelant.
